# FASCICULE DE BREVET EUROPEEN

(11) **EP 3 088 328 B1**
(45) Date de publication et mention de la délivrance du brevet: **07.03.2018**
(21) Numéro de dépôt: 16169067.2
(22) Date de dépôt: 27.09.2006
(51) Int. Cl.: B65D 81/34, A23L 7/161

(54) **PROCÉDÉ DE PRÉPARATION ET DE PRÉSENTATION DE COMPOSITION SOUFFLÉE**
HERSTELLUNGS- UND PRÄSENTATIONSVERFAHREN EINER FORMGEBLASENEN ZUSAMMENSETZUNG
METHOD FOR PREPARING AND PRESENTING A PUFFED COMPOSITION

(30) Priorité: 29.09.2005 FR 0509941
(43) Date de publication de la demande: 02.11.2016
(62) Demande divisionnaire de: 06820141.7
(73) Titulaire: NATAÏS, 32130 Bézéril (FR)
(72) Inventeur: EHMANN, Michael, 32130 BEZERIL (FR)
(74) Mandataire: Ipside

(56) Documents cités:
- WO-A-00/61456
- WO-A-2004/087530
- US-A- 5 214 257

## Description

La présente invention concerne un procédé de préparation de composition soufflée.

La présente invention concerne de nombreux types de compositions soufflées, en particulier du popcorn.

Par "composition soufflée", on entend au sens de la présente invention une composition dont au moins certains composants sont expansibles. Par exemple le volume de ces particules expansibles une fois soufflées est supérieur ou égal à deux fois, notamment à cinq fois, en particulier à dix fois, tout particulièrement à vingt fois, voire à trente fois, ou même à cinquante fois le volume avant soufflage.

Ces particules peuvent être soufflées notamment sous l'effet de la chaleur.

II est connu des ensembles comprenant un emballage et des grains de maïs à éclater, encore appelés non soufflés, destinés à être soufflés, notamment dans un four à microondes, pour obtenir du popcorn. Ces compositions comprennent généralement de la matière grasse comestible, notamment du type huile ou graisse, en quantité assez importante. Ceci a souvent pour conséquence d'une part de développer une odeur de friture peu agréable. D'autre part, l'emballage est fréquemment souillé par la matière grasse de la composition, ce qui peut provoquer un contact désagréable avec les doigts du consommateur.

Il subsiste ainsi un besoin pour un procédé de préparation, notamment par micro ondes, d'une composition soufflée qui ne présente pas les inconvénients évoqués ci-dessus.

Un procédé de préparation d'une composition soufflée est notamment décrit dans le document WO 00/61456 A2.

Selon un premier aspect, un ensemble de préparation et de présentation de composition comestible destinée à être soufflée est décrit, cet ensemble, indépendamment et en tant que tel, ne faisant pas partie de la présente invention telle que revendiquée dans les revendications 1 à 15, et comprenant :
- une partie (A) définissant une chambre destinée à permettre la présentation de la composition soufflée,
- une partie (B) définissant une chambre de stockage destinée à comprendre au moins une composition non soufflée, ladite partie (B) étant disposé dans la partie (A).

L'ensemble, qui, indépendamment et en tant que tel, ne fait pas partie de la présente invention, permet notamment de limiter la quantité de matière grasse présente dans et/ou en contact avec la partie (A) de présentation. En effet, la partie (B), éventuellement en association avec une autre partie, peut également permettre de collecter au moins une partie de la matière grasse.

### Brève description des figures

- Figures 1A et 1B : Vues en coupe d'ensembles de préparation et de présentation en mode plié,
- Figures 2A, 2B et 2C : Vues en coupe d'ensembles de préparation et de présentation avant préparation.
- Figures 3A, 3B et 3C : Vues en coupe d'ensembles de préparation et de présentation pendant le soufflage de la composition.

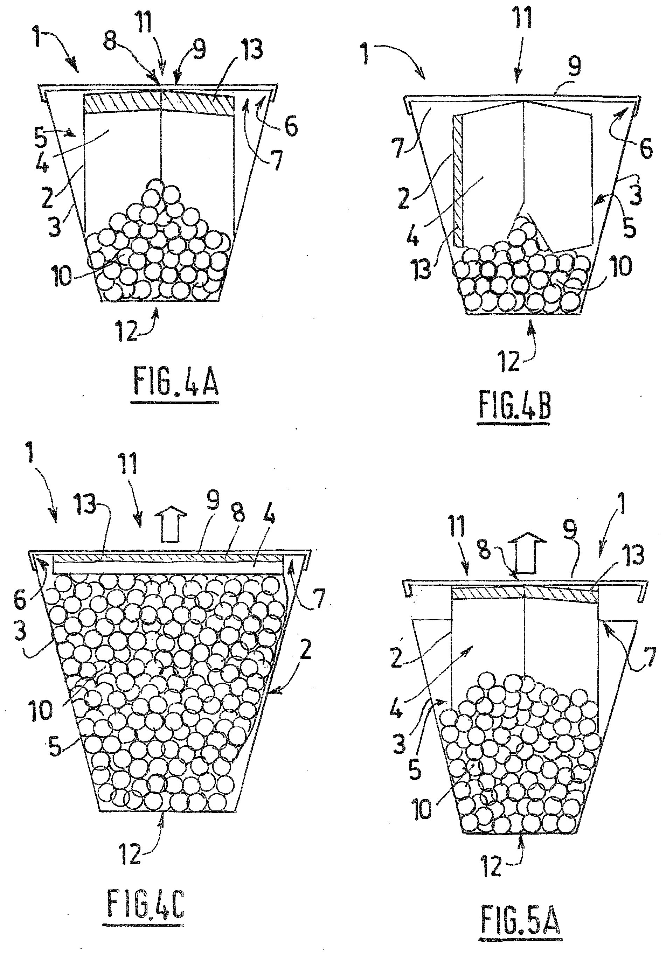

- Figures 4A, 4B et 4C : Vues en coupe d'ensembles avant ouverture.

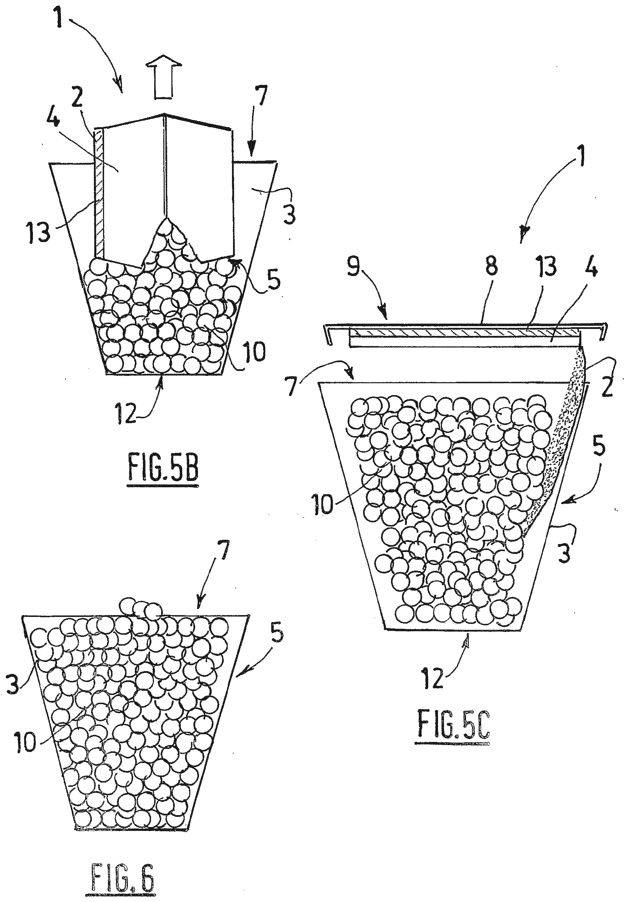

- Figures 5A, 5B et 5C : Vues en coupe d'ensembles lors de la séparation ou de l'extraction de la chambre de stockage.
- Figure 6 : Vue en coupe d'une partie présentation de composition soufflée d'un ensemble.

Les figures sont présentées à titre illustratif et nullement limitatif de l'invention.

L'ensemble, qui, indépendamment et en tant que tel, ne fait pas partie de la présente invention, peut également comprendre au moins une composition non soufflée, notamment dans la partie (B), et en particulier uniquement dans la partie (B).

L'ensemble (1) comprend une paroi (2) définissant une partie (B) destinée à former une chambre de stockage (4) pour la composition destinée à être soufflée. Ce dispositif (1) comprend également une paroi (3) définissant au moins une partie (A) destinée à former une chambre de présentation (5) de la composition soufflée.

Les parties (A) et (B) sont généralement bien distinctes. En particulier elles sont indépendantes, c'est-à-dire ne partager aucun élément, ou ne partager qu'au plus un moyen de fixation.

En particulier, la partie (B) est agencée pour être disposée dans la partie (A) de manière à confiner la composition soufflée lors du soufflage.

Par "confiner", on entend au sens de la présente invention que la partie (B) isole au moins une partie de l'intérieur de l'ensemble de la composition soufflée. En particulier la partie (B) permet que la composition, soufflée et/ou non soufflée, ne rentre pas en contact avec au moins une partie de l'intérieur de l'ensemble, notamment de sa face supérieure ou d'une paroi.

L'ensemble (1), qui, indépendamment et en tant que tel, ne fait pas partie de la présente invention, peut comprendre un suscepteur (13) agencé de telle manière que lorsque l'ensemble (1) est soumis à un chauffage par micro-ondes, il permet à la composition destinée à être soufflée d'atteindre la température permettant le soufflage de cette composition, en particulier lorsque :
- l'axe de l'ensemble présente un angle supérieur ou égal à 10°, notamment supérieur ou égal à 15° et en particulier supérieur ou égal à 20°, par rapport à un axe vertical, ou
- l'axe de l'ensemble présente un angle inférieur ou égal à 20°, notamment inférieur ou égal à 15°, et en particulier inférieur ou égal à 10° par rapport à un axe vertical et la face supérieure est située en dessous de la face inférieure.

En particulier, l'ensemble est placé sur le plateau du four via une de ses parois latérales ou via sa face supérieure.

Selon un mode de réalisation particulier, l'axe de l'ensemble peut présenter un angle inférieur ou égal à 45°, notamment inférieur ou égal à 30°, et en particulier un angle inférieur ou égal à 15° avec un axe horizontal, voire être horizontal.

Selon un autre mode de réalisation particulier, l'axe de l'ensemble peut présenter un angle inférieur ou égal à 5° par rapport à la verticale, voire être vertical et permettre, lorsque l'ensemble (1) est soumis à un chauffage par micro-onde avec la face supérieure placée en dessous de la face inférieure, à la composition d'être soufflée. Autrement dit, le dispositif peut être agencé de telle manière que lorsque l'axe de l'ensemble est sensiblement vertical et que ledit dispositif repose sur sa face supérieure dans un four, notamment à micro-ondes, le chauffage permet à la composition d'être soufflée, tout en souillant peu ou pas la partie de présentation (5).

En particulier, dans le cas d'un chauffage par micro-onde, l'agencement spécifique du suscepteur au voisinage de la face supérieure, voire uniquement sur la face supérieure ou sur la partie amovible, et plus particulièrement sur le couvercle peut permettre à la composition d'être soufflée.

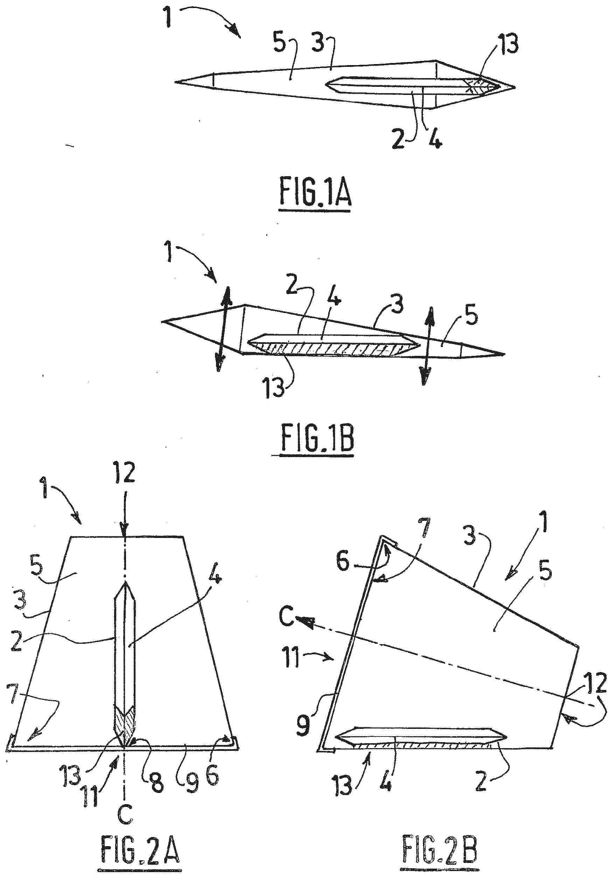

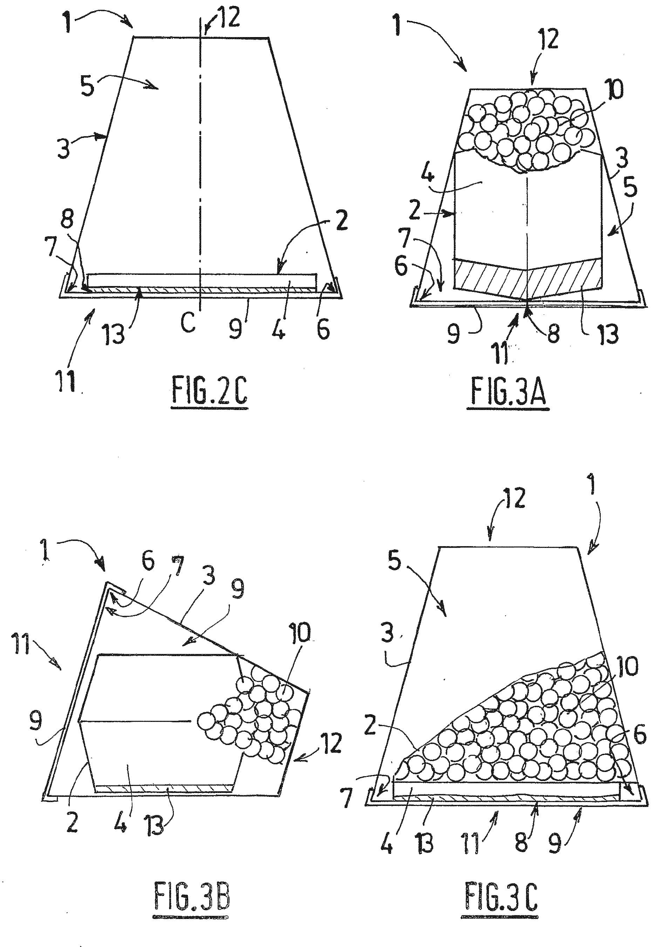

Par "axe de l'ensemble", on entend au sens de la présente invention un axe de symétrie de la partie (A) de présentation, en particulier l'axe (C) tel que représenté en figures 2A, 2B et 2C.

En particulier, l'ensemble comprend au moins une position dans laquelle un ou le plan défini par le suscepteur (13) présente un angle inférieur à 10° par rapport à l'horizontale, voire est horizontal, lorsque l'ensemble ne repose pas sur sa face inférieure.

La partie (B) de stockage peut être recouverte au moins partiellement par un suscepteur et/ou comprendre un suscepteur. Tout particulièrement le suscepteur présent dans l'ensemble (1) est uniquement présent sur cette partie (B).

En particulier, l'ensemble comprend un suscepteur qui est situé plus près de la partie supérieure (11) que de la partie inférieure (12), et notamment une partie du suscepteur est en contact avec la partie supérieure (11).

Tout particulièrement, le suscepteur est présent au moins en partie, voire uniquement, sur la chambre de stockage (4).

On entend par "suscepteur", au sens de la présente invention un élément, notamment métallisé, absorbant un rayonnement électromagnétique et le convertissant en chaleur.

Le suscepteur, en particulier dans le cadre d'une application micro-ondes, peut être composé d'au moins 2 couches de polymères, en particulier de PET, entre lesquelles à été déposé une couche métallique très mince, notamment à base d'aluminium. La déposition de la couche métallisée se fait généralement sous-vide, ce qui entraîne une vaporisation du métal et permet de créer des suscepteurs extrêmement fins. Les PET utilisés peuvent en général résister à une montée brutale de la température, et à un maintien de celle-ci. Le suscepteur peut notamment avoir pour rôle d'absorber le rayonnement micro-onde et de le convertir en chaleur. Le suscepteur peut monter très rapidement en température et diffuser l'énergie thermique à certains ou tous les éléments qui se situent à son voisinage immédiat.

L'ensemble (1) comprend une ouverture (7) permettant de prélever la composition soufflée.

Selon un mode de réalisation particulier, l'ensemble comprend une partie mobile ou amovible, destinée à être séparée de la partie chambre de présentation (5), de manière à ouvrir l'ensemble (1), notamment pour permettre l'accès à la composition soufflée au consommateur.

Cette partie amovible peut notamment comprendre le couvercle de l'ensemble (1).

Tout particulièrement, cette partie amovible est liée à la chambre de stockage (4). Ceci permet notamment lors de l'ouverture de l'ensemble (1) de retirer la chambre de stockage (4) souillée par exemple par les matières grasses. Ainsi, le dispositif (1) permet que la chambre de présentation (5) ne soit pas souillée par toutes les matières grasses de la composition, et soit donc propre ou relativement propre, notamment en terme de matières grasse.

Cette partie amovible peut également comprendre au moins un suscepteur. En particulier le (s) suscepteur(s) présent dans l'ensemble (1) est(sont) présent(s) uniquement sur cette partie amovible.

L'ensemble (1) comprend une face supérieure (11) et une face inférieure (12). Celles-ci peuvent être de forme rectangulaire ou circulaire. En particulier, la face supérieure (11) présente une surface égale ou plus grande que la face inférieure (12).

La face inférieure (12) peut être définie comme la face sur laquelle repose la chambre de présentation (5) lorsque celle-ci est séparée de la chambre de stockage (4). La face supérieure (11) comprend l'ouverture (7). En particulier la face supérieure fait partie de la partie amovible.

Autrement exprimé, la face supérieure est la face sur laquelle se situe l'ouverture destinée à permettre d'accéder à la composition soufflée.

L'ensemble (1) peut comprendre des moyens de séparations (6) destinés à séparer la chambre de présentation (5) d'une partie (9) destinée à former une ouverture (7). Cette partie (9) peut être par exemple un couvercle, dans ce cas, les moyens de séparation peuvent notamment être un clippage du couvercle sur la paroi (3).

Les moyens de séparations (6) peuvent par exemple être un pré-découpage de la paroi (3), une matérialisation de la partie à découper sur la partie externe de la paroi (3) ou des moyens d'accrochage d'un couvercle à la paroi (3) .

La paroi (2) peut être liée par des moyens de fixation (8) à la partie (9), notamment de manière à ce que lorsque la chambre de présentation et la partie (9) sont séparées, la chambre de stockage (4) puisse être retirée en même temps.

Parmi les moyens de fixations (8) on peut citer la colle.

L'ensemble (1) peut comprendre des moyens d'ouverture (9). Ces moyens d'ouverture (9) peuvent consister en des volets accrochés l'un à l'autre ou en un couvercle.

Lorsque l'ensemble (1) est ouvert, au moins une partie de la paroi (2) peut se situer au-dessus de la composition soufflée (10), notamment de manière à ce qu'il soit aisé de retirer la chambre de stockage (4).

La paroi (2) peut notamment être réalisée avec des matériaux imperméables à la lumière, à l'air, à l'humidité et/ou aux matières grasses. Ceci pouvant notamment permettre une meilleure conservation de la composition alimentaire.

La paroi (3) peut notamment être rigide, et en particulier elle peut être réalisée en plastique ou à partir de matière cartonnée, notamment en carton en fibre de bois vierge pour respecter le contact alimentaire.

Tout particulièrement, la paroi (2) permet l'utilisation d'huile(s) liquide présentant de bonnes qualités nutritionnelles et de santé, en particulier en terme de faible teneur en matières grasses partiellement hydrogénées et/ou en acides gras saturés.

La paroi (3) peut comprendre des fentes ou des ouvertures permettant notamment une évacuation de la vapeur d'eau et de la chaleur.

Les dimensions de la chambre de stockage (4) sont ajustées de manière à permettre que la composition soit correctement soufflée. Par " correctement soufflé ", on entend au sens de la présente invention qu'au moins 70 %, notamment au moins 80 %, en particulier au moins 90 %, tout particulièrement au moins 95 %, et encore plus particulièrement 99 % des grains composant la composition alimentaire ont été soufflés.

En particulier, l'épaisseur de la chambre de stockage (4) peut être inférieure ou égale à 4 cm, notamment inférieure ou égale à 3 cm, en particulier inférieure ou égale à 2,5 cm, par exemple inférieure ou égale à 2 cm, tout particulièrement inférieure ou égale à 1,5 cm.

En général, la chambre de stockage (4) comprend de 5 à 300 g, notamment de 10 à 250 g, en particulier de 20 à 200g de composition destinée à être soufflée.

La chambre de stockage (4) est agencée pour s'ouvrir sous l'effet de l'expansion de la composition soufflée. Dans ce cas, l'ouverture de la chambre de stockage peut donc plus particulièrement se faire vers la face inférieure (12).

La chambre de stockage (4) peut être réalisée, en tout ou partie, en polyéthylène, polypropylène, polyéthylène téréphtalate (PET), cellophane, mylar, films laminés à base d'oxydes d'aluminium ou de silicium, nylon, feuilles métalliques, film polymère métallisé, papiers traités, produits laminés, ou un mélange de ceux-ci.

La chambre de stockage peut tout particulièrement être réalisée en PET, et notamment comprendre uniquement 2 couches de PET au maximum, et notamment, les scellages peuvent faire intervenir deux couches de PET au maximum. Ceci peut notamment permettre l'ouverture de la chambre de stockage sans avoir recours à un chauffage excessif. En effet, lorsque 4 couches de PET sont scellées, le chauffage nécessaire à l'ouverture de la chambre de stockage peut être excessif et/ou engendrer des dégradations.

En particulier, la chambre de stockage peut être réalisée sur une ensacheuse verticale.

Tout particulièrement, la chambre de stockage peut être métallisée ou partiellement démétallisée pour définir un suscepteur.

La chambre de stockage (4) peut présenter, après soufflage, une partie intacte du côté de la face supérieure (H). En particulier, la chambre de stockage (4) s'ouvre du côté opposé à la face supérieure.

La chambre de stockage (4) peut comprendre plusieurs compartiments, comprenant chacun diverses parties ou ingrédients de la composition à souffler. En particulier elle comprend trois compartiments. Un compartiment peut comprendre des grains à éclater, un autre au moins une matière grasse, et encore un autre au moins un colorant et/ou un arôme.

Les compartiments peuvent être séparés les uns des autres, notamment par un scellage fin. En particulier, le scellage peut être effectué par ultrason ou être un scellage thermique.

Lors du chauffage, les grains à éclater libèrent de la vapeur et conduisent à la libération progressive des ingrédients sur les grains. Ceci peut permettre ensuite, après l'ouverture des différents scellages fins délimitant les compartiments, l'ouverture de la chambre de stockage (4), notamment dans la direction opposée au suscepteur et/ou à l'ouverture du dispositif.

Les compartiments peuvent s'ouvrir selon un certain schéma temporel. Notamment selon la force nécessaire à l'ouverture des différents scellages et selon la quantité de vapeur libérée dans les compartiments, il est possible de faire en sorte que les compartiments s'ouvrent selon un schéma temporel assez précis. Par exemple, le scellage entre le premier compartiment et le deuxième peut s'ouvrir après 1 minute de chauffage par micro-onde à une certaine puissance, puis le scellage entre le deuxième compartiment et le troisième peut s'ouvrir après 2 minutes de chauffage, etc. Ceci peut notamment permettre de contrôler et/ou de limiter, au moins partiellement, le chauffage de certains ingrédients et ainsi, par exemple, de limiter la dégradation de certains ingrédients qui peuvent être sensibles à la chaleur ou de contrôler le degré de caramélisation de la composition soufflée, etc.

La chambre de présentation (5) présente en général un volume allant de 150 à 9000 cm3, notamment de 300 à 7500 cm3, et en particulier de 600 à 6000 cm3.

Ainsi que le montrent les figures 1A et IB, l'ensemble (1), qui, indépendamment et en tant que tel, ne fait pas partie de la présente invention, telle que revendiquée dans les revendications 1 à 15, peut se présenter sous forme pliée, ce qui peut notamment permettre de réduire l'espace nécessaire pour son stockage.

L'ensemble (1) peut être placé dans un emballage, notamment imperméable à la lumière, à l'air et/ou à l'eau. Cet emballage peut permettre une meilleure conservation de la composition alimentaire.

En général, il est nécessaire de retirer cet emballage avant chauffage.

L'ensemble est particulièrement destiné à être utilisé dans un four à micro-ondes. Dans ce cas, les matériaux utilisés sont, bien entendu, compatibles avec ces conditions.

L'ensemble peut également comprendre des matériaux destinés à améliorer le chauffage par microondes.

L'ensemble comprend une composition comestible destinée à être soufflée.

Cette composition peut notamment comprendre des grains de maïs à éclater.

Cette composition peut comprendre également au moins une matière grasse, notamment une graisse ou une huile, notamment de l'huile de palme, de l'huile de carthame, de l'huile de colza, de l'huile de coton, de l'huile de maïs, de l'huile de lin, de l'huile d'arachide, de l'huile de tournesol et/ou de l'huile de soja.

La composition peut comprendre du sel, du poivre et/ou du paprika.

La composition peut également comprendre un agent sucrant, par exemple choisi dans la liste comprenant du sucralose, de l'isomalt, du sucre, notamment du sucre glace ou cristal.

La composition peut également comprendre au moins un agent de texture et/ou au moins un agent de saveur, par exemple choisi dans la liste comprenant l'arôme beurre, l'arôme caramel, l'arôme cheddar, l'arôme TexMex et l'arôme piment.

La composition peut comprendre au moins un arôme, notamment choisi dans la liste comprenant le doux, l'aigre, le sucré, le savoureux, l'apre, l'épicé et le fruité, le beurre, le fromage, la crème, la ciboulette, l'aneth, les fines herbes, l'oignon, l'ail, le bacon, la pizza, la tomate, le vinaigre, le barbecue, la cannelle, la noix de muscade, le fumé, ou un mélange de ceux-ci.

La composition peut comprendre au moins un exhausteur de goût.

La composition peut en outre comprendre au moins un colorant alimentaire, notamment choisi dans la liste comprenant le colorant naturel E160b orange. La présente invention a pour objet un procédé de préparation et de présentation de popcorn, selon la revendication 1, comprenant au moins les étapes suivantes consistant à :
- placer un ensemble (1) de préparation et de présentation de composition comestible destinée à être soufflée comprenant :
   - une partie (A) définissant une chambre destinée à permettre la présentation de la composition soufflée, dite chambre de présentation (5), ladite chambre de présentation (5) présentant une face inférieure (12) et une face supérieure (11) présentant une ouverture (7),
   - une partie (B) définissant une chambre de stockage (4) comprenant au moins ladite composition non soufflée, ladite partie (B) étant disposée dans la partie (A), et la chambre de stockage (4) étant agencée pour s'ouvrir dans la chambre de présentation (5) sous l'effet de l'expansion de la composition lors de son soufflage, et étant retirable par l'ouverture (7), dans un appareil de chauffage, la face inférieure (12) n'étant pas en contact avec le plan supportant l'ensemble (1),
   - chauffer l'ensemble (1),
   - ouvrir l'ensemble, et
   - retirer la chambre de stockage (4) de la chambre de présentation (5).
Tout particulièrement dans le cas où l'ensemble (1) comprend une partie amovible comprenant la partie de stockage (4) reliée à un couvercle, les deux dernières étapes peuvent être concomitantes.

En particulier, le procédé comprend une étape supplémentaire consistant à placer la face inférieure (12) de l'ensemble (1) à un angle inférieur ou égal à 30°, notamment inférieur ou égal à 20°, et en particulier inférieur ou égal à 10° par rapport à l'horizontale, voire à l'horizontale, avant l'étape d'ouverture.

Selon encore un autre aspect, le procédé comprend au moins une étape consistant à insérer au moins une composition non soufflée dans la chambre de stockage (4).

## Revendications

1. Procédé de préparation d'une composition comestible soufflée à partir d'une composition non soufflée, et de présentation de ladite composition comestible soufflée, comprenant au moins les étapes suivantes consistant à :
- placer un ensemble (1) de préparation et de présentation de composition comestible destinée à être soufflée, comprenant :
▪ une partie (A) définissant une chambre destinée à permettre la présentation de la composition soufflée, dite chambre de présentation (5), ladite chambre de présentation (5) présentant une face inférieure (12) et une face supérieure (11) présentant une ouverture (7),
▪ une partie (B) définissant une chambre de stockage (4) comprenant au moins ladite composition non soufflée, ladite partie (B) étant disposée dans la partie (A), et la chambre de stockage (4) étant agencée pour s'ouvrir dans la chambre de présentation (5) sous l'effet de l'expansion de la composition lors de son soufflage, et étant retirable par l'ouverture (7),
dans un appareil de chauffage,
**caractérisé en ce que** :
l'ensemble est placé dans ledit appareil de chauffage de telle manière que la face inférieure (12) de la chambre de présentation (5) n'est pas en contact avec le plan supportant l'ensemble et **en ce que** le procédé comprend les étapes ultérieures consistant à :
- chauffer l'ensemble (1),
- ouvrir l'ensemble (1), et
- retirer la chambre de stockage (4) de la chambre de présentation (5).

2. Procédé selon la revendication 1, selon lequel l'ensemble (1) est placé dans l'appareil de chauffage de telle sorte qu'il repose sur la face supérieure (11) sur le plan supportant l'ensemble (1) de l'appareil de chauffage.

3. Procédé selon la revendication 2, selon lequel la chambre de stockage (4) est agencée pour s'ouvrir vers la face inférieure (12) sous l'effet de l'expansion de la composition lors de son soufflage lorsque l'ensemble (1) est placé dans l'appareil de chauffage de telle sorte qu'il repose sur la face supérieure (11) sur le plan supportant l'ensemble (1) de l'appareil de chauffage.

4. Procédé selon l'une quelconque des revendications 1 à 3, selon lequel l'appareil de chauffage est un four et le plan supportant l'ensemble (1) est la grille dudit four.

5. Procédé selon l'une quelconque des revendications 1 à 3, selon lequel l'appareil de chauffage est un four à micro-ondes et le plan supportant l'ensemble (1) est le plateau dudit four à micro-ondes.

6. Procédé selon l'une quelconque des revendications 1 à 5, comprenant, après l'étape consistant à chauffer l'ensemble (1), une étape consistant à placer l'ensemble (1) de sorte à ce que la chambre de présentation (5) repose sur la face inférieure (12) pour l'étape consistant à retirer la chambre de stockage (4).

7. Procédé selon l'une quelconque des revendications 1 à 6, selon lequel l'étape consistant à chauffer l'ensemble (1) est réalisée jusqu'à ce que la composition soit soufflée.

8. Procédé selon l'une quelconque des revendications 1 à 7, comprenant au moins une étape consistant à insérer au moins une composition non soufflée dans la chambre de stockage (4).

9. Procédé selon l'une quelconque des revendications 1 à 8, selon lequel l'ensemble (1) comprend un suscepteur (13) susceptible d'absorber un rayonnement électromagnétique et de le convertir en chaleur, agencé de telle manière que lorsque l'ensemble (1) est soumis à un chauffage par micro-ondes, il permet à la composition non soufflée d'atteindre la température permettant le soufflage de cette composition.

10. Procédé selon la revendication 9, selon lequel l'ensemble (1) comprend une partie amovible et ledit suscepteur (13) est présent uniquement sur ladite partie amovible.

11. Procédé selon l'une quelconque des revendications 9 à 10, selon lequel la chambre de stockage (4) est recouverte au moins partiellement par ledit suscepteur (13) et/ou comprend ledit suscepteur (13).

12. Procédé selon la revendication 11, selon lequel la chambre de stockage (4) est métallisée ou partiellement démétallisée pour définir un suscepteur.

13. Procédé selon l'une quelconque des revendications 1 à 12, selon lequel la composition non soufflée comprend du maïs à éclater.

14. Procédé selon l'une quelconque des revendications 1 à 13, selon lequel la composition non soufflée comprend au moins une matière grasse.

15. Procédé selon l'une quelconque des revendications 1 à 14, selon lequel la chambre de stockage (4) comprend plusieurs compartiments.

## Patentansprüche

1. Verfahren zur Herstellung einer essbaren, aufgeblähten Zusammensetzung aus einer nicht aufgeblähten Zusammensetzung und zur Bereitstellung der essbaren, aufgeblähten Zusammensetzung, das mindestens die folgenden Schritte aufweist:
- Anordnen einer Anordnung (1) zur Herstellung und Bereitstellung der essbaren Zusammensetzung, die dazu bestimmt ist, aufgebläht zu werden, aufweisend:
▪ einen Teil (A), der eine Kammer definiert, die dazu bestimmt ist, die Bereitstellung der aufgeblähten Zusammensetzung zu ermöglichen, genannt Bereitstellungskammer (5), wobei die Bereitstellungskammer (5) eine untere Seite (12) und eine obere Seite (11) aufweist, die eine Öffnung (7) aufweist,
▪ einen Teil (B), der eine Lagerkammer (4) definiert, die mindestens die nicht aufgeblähte Zusammensetzung aufweist, wobei der Teil (B) in dem Teil (A) angeordnet ist, und die Lagerkammer (4) derart eingerichtet ist, dass sie sich unter Einwirkung der Ausdehnung der Zusammensetzung während deren Aufblähung in die Bereitstellungskammer (5) öffnet und durch die Öffnung (7) abnehmbar ist,
in einem Erwärmungsgerät, **dadurch gekennzeichnet, dass**: die Anordnung in dem Erwärmungsgerät derart angeordnet wird, dass die untere Seite (12) der Bereitstellungskammer (5) nicht mit der Fläche in Kontakt ist, die die Anordnung trägt, und dadurch, dass das Verfahren die weiteren Schritte aufweist:
- Erwärmen der Anordnung (1),
- Öffnen der Anordnung (1), und
- Abnehmen der Lagerkammer (4) von der Bereitstellungskammer (5).

2. Verfahren nach Anspruch 1, wonach die Anordnung (1) derart in dem Erwärmungsgerät angeordnet wird, dass sie auf der oberen Seite (11) auf der Fläche ruht, die die Anordnung (1) des Erwärmungsgeräts trägt.

3. Verfahren nach Anspruch 2, wonach die Lagerkammer (4) derart eingerichtet ist, dass sie sich unter Einwirkung der Ausdehnung der Zusammensetzung während deren Aufblähung zur unteren Seite (12) öffnet, während die Anordnung (1) derart in dem Erwärmungsgerät angeordnet wird, dass sie auf der oberen Seite (11) auf der Fläche ruht, die die Anordnung (1) des Erwärmungsgeräts trägt.

4. Verfahren nach einem der Ansprüche 1 bis 3, wonach das Erwärmungsgerät ein Ofen ist und die Fläche, die die Anordnung (1) trägt, das Gitter des Ofens ist.

5. Verfahren nach einem der Ansprüche 1 bis 3, wonach das Erwärmungsgerät ein Mikrowellenofen ist und die Fläche, die die Anordnung (1) trägt, der Teller des Mikrowellenofens ist.

6. Verfahren nach einem der Ansprüche 1 bis 5, das, nach dem Schritt zum Erwärmen der Anordnung (1), einen Schritt zum Anordnen der Anordnung (1) aufweist, so dass die Bereitstellungskammer (5) für den Schritt zum Abnehmen der Lagerkammer (4) auf der unteren Seite (12) ruht.

7. Verfahren nach einem der Ansprüche 1 bis 6, wonach der Schritt zum Erwärmen der Anordnung (1) so lange durchgeführt wird, bis die Zusammensetzung aufgebläht ist.

8. Verfahren nach einem der Ansprüche 1 bis 7, das mindestens einen Schritt zum Einführen mindestens einer nicht aufgeblähten Zusammensetzung in die Lagerkammer (4) aufweist.

9. Verfahren nach einem der Ansprüche 1 bis 8, wonach die Anordnung (1) einen Suszeptor (13) aufweist, der geeignet ist, eine elektromagnetische Strahlung zu absorbieren und sie in Wärme umzuwandeln, der derart eingerichtet ist, dass, wenn die Anordnung (1) einer Erwärmung durch Mikrowellen unterzogen wird, er es der nicht aufgeblähten Zusammensetzung ermöglicht, die Temperatur zu erreichen, die das Aufblähen dieser Zusammensetzung ermöglicht.

10. Verfahren nach Anspruch 9, wonach die Anordnung (1) einen abnehmbaren Teil aufweist und der Suszeptor (13) nur auf dem abnehmbaren Teil vorhanden ist.

11. Verfahren nach einem der Ansprüche 9 bis 10, wonach die Lagerkammer (4) mindestens teilweise von dem Suszeptor (13) bedeckt ist und/oder den Suszeptor (13) aufweist.

12. Verfahren nach Anspruch 11, wonach die Lagerkammer (4) metallisiert oder teilweise entmetallisiert ist, um einen Suszeptor zu definieren.

13. Verfahren nach einem der Ansprüche 1 bis 12, wonach die nicht aufgeblähte Zusammensetzung Popcornmais aufweist.

14. Verfahren nach einem der Ansprüche 1 bis 13, wonach die nicht aufgeblähte Zusammensetzung mindestens eine Fettsubstanz aufweist.

15. Verfahren nach einem der Ansprüche 1 bis 14, wonach die Lagerkammer (4) mehrere Abteile aufweist.

## Claims

1. Method for preparing an edible puffed composition from a non-puffed composition, and for presenting said edible puffed composition, comprising at least the following steps:
- placing an assembly (1) for preparing and presenting an edible composition intended to be puffed, comprising:
• a portion (A) defining a chamber for presenting the puffed composition, called presentation chamber (5), said presentation chamber (5) having a lower face (12) and an upper face (11) having an opening (7),
• a portion (B) defining a storage chamber (4) including at least said non-puffed composition, said portion (B) being arranged in the portion (A), and the storage chamber (4) being arranged to open into the presentation chamber (5) when exposed to the expansion of the composition being puffed, and being removable through the opening (7),
in a heating apparatus,
**characterized in that**:
the assembly is placed in said heating apparatus in such a way that the lower face (12) of the presentation chamber (5) is not in contact with the plane supporting the assembly
and **in that** the method comprises the further steps of:
- heating the assembly (1),
- opening the assembly (1), and
- removing the storage chamber (4) from the presentation chamber (5).

2. Method according to claim 1, wherein the assembly (1) is placed in the heating apparatus in such a way that it rests on its upper face (11) on the plane of the heating apparatus supporting the assembly (1).

3. Method according to claim 2, wherein the storage chamber (4) is arranged to open towards the lower face (12) when exposed to the expansion of the composition being puffed when the assembly (1) is placed in the heating apparatus in such a way that it rests on the upper face (11) on the plane of the heating apparatus supporting the assembly (1).

4. Method according to any one of claims 1 to 3, wherein the heating apparatus is an oven and the plane supporting the assembly (1) is the rack of said oven.

5. Method according to any one of claims 1 to 3, wherein the heating apparatus is a microwave oven and the plane supporting the assembly (1) is the plate of said microwave oven.

6. Method according to any one of claims 1 to 5, comprising, after the step of heating the assembly (1), a step of placing the assembly (1) in such a way that the presentation chamber (5) rests on the lower face (12) for the step of removing the storage chamber (4).

7. Method according to any one of claims 1 to 6, wherein the step of heating the assembly (1) is carried out until the composition has puffed.

8. Method according to any one of claims 1 to 7, comprising at least a step of inserting at least a non-puffed composition in the storage chamber (4).

9. Method according to any one of claims 1 to 8, wherein the assembly (1) comprises a susceptor (13) capable of absorbing electromagnetic radiation and of converting it into heat, arranged in such a way that when the assembly (1) is subjected to microwave heating it allows the non-puffed composition to reach the temperature that allows this composition to puff.

10. Method according to claim 9, wherein the assembly (1) comprises a removable portion and said susceptor (13) is present only on said removable portion.

11. Method according to any one of claims 9 to 10, wherein the storage chamber (4) is at least partially covered with said susceptor (13) and/or comprises said susceptor (13).

12. Method according to claim 11, wherein the storage chamber (4) is metallised or partially demetallised to define a susceptor.

13. Method according to any one of claims 1 to 12, wherein the non-puffed composition comprises corn to be popped.

14. Method according to any one of claims 1 to 13, wherein the non-puffed composition comprises at least one fatty substance.

15. Method according to any one of claims 1 to 14, wherein the storage chamber (4) comprises several compartments.
